# DEMANDE DE BREVET EUROPEEN

(11) **EP 3 489 149 A1**
(43) Date de publication de la demande: **29.05.2019**
(21) Numéro de dépôt: 18207743.8
(22) Date de dépôt: 22.11.2018
(51) Int. Cl.: B64D 45/02, H02G 13/00, H01Q 1/42

(54) **SYSTEME DE PROTECTION PARAFOUDRE POUR RADOME D'AERONEF**

(30) Priorité: 28.11.2017 FR 1761261
(71) Demandeur: Airbus Operations (S.A.S.), 31060 Toulouse Cedex 9 (FR)
(72) Inventeur: MARTY, Jean-Claude, 31400 Toulouse (FR); BERNUS, Christophe, 31000 Toulouse (FR)
(74) Mandataire: Cabinet Le Guen Maillet

(57) **Abrégé**

Un système de protection parafoudre destiné à équiper un radôme (101) d'un aéronef comporte une bande segmentée (200) destinée à transmettre la foudre par ionisation de l'air jusqu'à un point de jonction avec la structure de l'aéronef. La bande segmentée (200) est destinée à être installée du côté d'une paroi interne (303) du radôme (101). Le système de protection parafoudre comporte au moins un plot métallique (305) destiné à être installé dans un trou traversant du radôme (101), de sorte à affleurer avec une paroi externe (302) du radôme (101) qui est opposée à la paroi interne (303) et qui est destinée à être soumise à un écoulement d'air (300) lorsque l'aéronef se déplace. L'agencement de la bande segmentée et du ou des plots métalliques est tel que, lorsque la foudre frappe un dit plot métallique du côté de la paroi externe (302) du radôme (101), la foudre est transmise à ladite bande segmentée (200) du côté de la paroi interne (303) du radôme (101). Ainsi, le système de protection parafoudre est efficace, n'obère pas la transparence du radôme aux ondes radioélectriques, et ne perturbe pas le diagramme de rayonnement d'un système antennaire protégé par le radôme (101).

## Description

### DOMAINE TECHNIQUE

La présente invention concerne un système de protection parafoudre pour radôme d'aéronef, un radôme d'aéronef équipé d'un tel système de protection parafoudre, et un aéronef équipé d'au moins un tel radôme.

### ETAT DE LA TECHNIQUE ANTERIEURE

Les systèmes de protection parafoudre pour aéronef sont typiquement constitués de bandes métalliques continues (« continuous métal strips » en langue anglo-saxonne) qui sont installées sur la paroi extérieure d'un radôme de l'aéronef et reliées électriquement à une jonction avec le fuselage de l'aéronef. La présence de telles bandes métalliques continues ainsi installées sur le radôme en question engendre cependant des perturbations aérodynamiques (transitions laminaire-turbulent) qui accroissent la trainée aérodynamique et donc la consommation en carburant de l'aéronef. Un autre effet de tels systèmes de protection parafoudre est une perturbation du diagramme de rayonnement du ou des systèmes antennaires que le radôme protège, ainsi qu'une baisse de la transparence aux ondes radioélectriques. De manière à améliorer l'aérodynamisme, il a été proposé dans les documents de brevet FR 2924686 B1 et FR 2999535 B1, d'installer ces bandes métalliques continues sur la paroi interne du radôme. Subsistent cependant les difficultés liées aux perturbations du diagramme de rayonnement du ou des systèmes antennaires que le radôme protège et à la baisse de transparence aux ondes radioélectriques.

De manière à limiter la perturbation du ou des systèmes antennaires que le radôme protège, des systèmes de protection parafoudre à bandes segmentées (« segmented diverter strips » en langue anglo-saxonne) sont apparus. Leur principe est de canaliser le cheminement de la foudre par ionisation de l'air entre les segments lorsque le champ électrique environnant devient important, ce qui est le cas en présence de nuages d'orages. Etant donné que la taille des segments (typiquement de 1 à 3 mm) est petite vis-à-vis de la longueur d'onde des systèmes antennaires radar (typiquement à une fréquence de 9 GHz, soit une longueur d'onde de 32 mm) et de la longueur d'onde des systèmes antennaires de communication (typiquement à une fréquence de 300MHz, soit une longueur d'onde de 1m), ces bandes segmentées sont quasiment sans impact sur le diagramme de rayonnement de ces système antennaires et sur la transparence du radôme aux ondes radioélectriques.

Ces systèmes de protection parafoudre à bandes segmentées sont toutefois sensibles à l'eau et au givre, puisque dans ces conditions, l'ionisation de l'air est rendue difficile. Ainsi, en présence d'eau (ce qui est fréquent en conditions orageuses) ou de givre, les systèmes de protection parafoudre à bandes segmentées perdent en efficacité.

Il est souhaitable de fournir une solution de système de protection parafoudre qui permette de limiter à la fois la perturbation du ou des systèmes antennaires protégés par le radôme et la trainée aérodynamique et donc de la consommation de carburant de l'aéronef, ainsi que la sensibilité à l'eau ou au givre.

### EXPOSE DE L'INVENTION

Un objet de la présente invention est de proposer un système de protection parafoudre destiné à équiper un radôme d'un aéronef et comportant une bande segmentée ou une succession de bandes segmentées qui est destinée à transmettre la foudre, par ionisation de l'air entre des segments régulièrement espacés sur ladite bande segmentée, à destination d'un point de jonction avec la structure de l'aéronef. Le système de protection parafoudre est tel que la bande segmentée est installée du côté d'une paroi interne dudit radôme ; le système de protection parafoudre comporte en outre au moins un plot métallique destiné à être installé dans un trou traversant dudit radôme de sorte à affleurer avec une paroi externe (302) du radôme qui est opposée à ladite paroi interne et qui est destinée à être soumise à un écoulement d'air lorsque l'aéronef se déplace. De plus, l'agencement de la bande segmentée et du ou des plots métalliques est tel que, lorsque la foudre frappe un dit plot métallique du côté de la paroi externe du radôme, la foudre est transmise à ladite bande segmentée du côté de la paroi interne du radôme.

Ainsi, un ou plusieurs systèmes antennaires protégés par le radôme ne sont pas perturbés par le système de protection parafoudre ainsi constitué grâce à l'utilisation de bandes segmentées, et la traînée aérodynamique est réduite, comme la consommation de carburant de l'aéronef, grâce à l'affleurement de chaque plot métallique avec la paroi externe du radôme. L'utilisation de bandes segmentées permet de ne pas obérer la transparence du radôme aux ondes radioélectriques. Enfin, le positionnement des bandes segmentées du côté de la paroi interne du radôme les protège des intempéries, notamment de la pluie et du givre. Les bandes segmentées sont ainsi plus efficaces, et facilitent des opérations de peinture et/ou de ponçage qui pourraient intervenir sur la paroi externe du radôme.

Selon un mode de réalisation particulier, la bande segmentée est destinée à être collée sur la paroi interne du radôme.

Selon un mode de réalisation particulier, chaque plot métallique présente une forme tronconique et est destiné à être installé de sorte que la base la plus large de cette forme tronconique affleure avec la paroi externe du radôme.

Selon un mode de réalisation particulier, le système de protection parafoudre comporte en outre une bande métallique continue ou une succession de bandes métalliques continues destinée à être placée du côté de la paroi interne et destinée à connecter la bande segmentée audit point de jonction.

Selon un mode de réalisation particulier, la bande métallique continue ou la succession de bandes métalliques continues est destinée à être maintenue du côté de la paroi interne grâce à au moins un dit plot métallique.

Selon un mode de réalisation particulier, ladite bande segmentée fait partie d'une succession de bandes segmentées entre lesquelles sont intercalés desdits plots métalliques.

Un autre objet de la présente invention est de proposer un radôme destiné à équiper un aéronef, le radôme comportant une paroi externe destinée à être soumise à un écoulement d'air lorsque l'aéronef se déplace et une paroi interne opposée à ladite paroi externe, et comportant au moins un système de protection parafoudre dans l'un quelconque des modes de réalisation présentés ci-dessus.

Un autre objet de la présente invention est de proposer un aéronef comportant au moins un système antennaire et au moins un radôme tel que présenté ci-dessus, chaque radôme protégeant au moins un dit système antennaire.

Selon un mode de réalisation particulier, l'aéronef est tel que le système antennaire est placé à une distance dans l'air avec le plot métallique le plus proche supérieure à la distance d'air cumulé entre les segments de la ou des bandes segmentées.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
- la Fig. 1 illustre schématiquement, en vue de côté, un aéronef dans lequel la présente invention peut être implémentée ;
- la Fig. 2 illustre schématiquement, en vue de dessus, une bande segmentée utilisée dans un système de protection parafoudre de l'aéronef ;
- la Fig. 3 illustre schématiquement une vue en coupe simplifiée d'un assemblage de la bande segmentée sur un panneau de radôme de l'aéronef ;
- la Fig. 4 illustre schématiquement, en perspective, un écoulement d'air sur une paroi extérieure du panneau de radôme sur lequel est réalisé l'assemblage de la Fig. 3 ;
- la Fig. 5 illustre schématiquement, en vue en coupe simplifiée, un agencement de système de protection parafoudre combinant bandes segmentées internes et bandes métalliques continues internes.

### EXPOSE DETAILLE DE MODES DE REALISATION

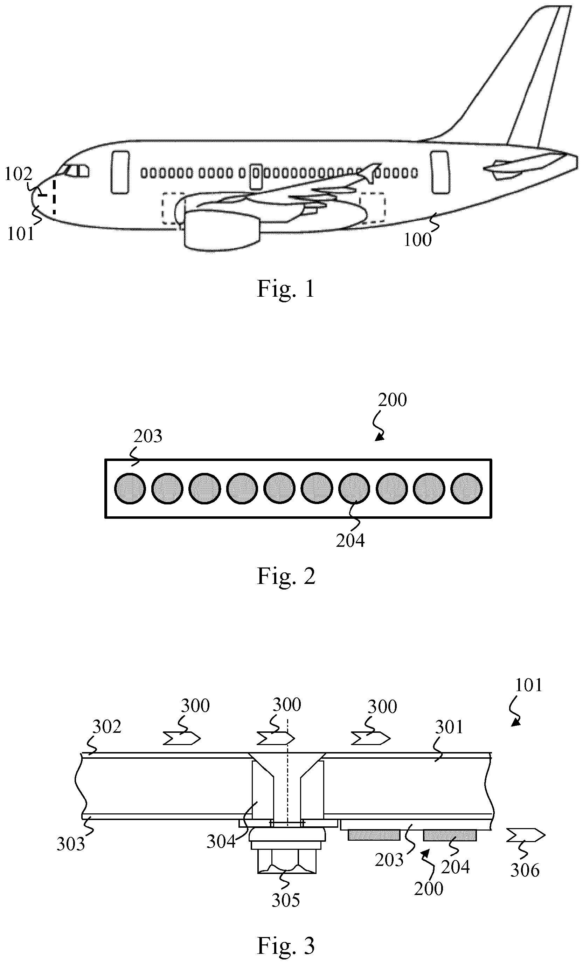

La **Fig. 1** illustre schématiquement, en vue de côté, un aéronef 100 dans lequel la présente invention peut être implémentée. L'aéronef 100 comporte un ou plusieurs radômes 101. Considérons par la suite, à titre purement illustratif, que l'aéronef 100 comporte un unique radôme 101, tel qu'un radôme de nez, destiné à protéger des intempéries un système antennaire 102, tel qu'une antenne de radar et/ou une antenne de communication. Le radôme 101 est équipé d'un système de protection parafoudre, tel que décrit ci-après.

La **Fig. 2** illustre schématiquement, en vue de dessus, une bande segmentée 200 utilisée dans le système de protection parafoudre décrit ci-après. La bande segmentée 200 comporte un ensemble de pastilles métalliques 204 (ou d'une manière générale, de segments métalliques) régulièrement espacées montées sur une plaque ou un ruban de matériau diélectrique 203. La bande segmentée 200 représentée sur la Fig. 2 est destinée à être collée sur un panneau de radôme, selon un agencement détaillé ci-après en relation avec la Fig. 3.

La **Fig. 3** illustre schématiquement une vue en coupe simplifiée (hachures omises) d'un assemblage de la bande segmentée 200 sur un panneau du radôme 101. Le panneau du radôme 101 comporte un coeur 301, par exemple en matériau alvéolaire ou en mousse, dont une première face est recouverte d'une première peau 302 pour former une paroi externe du radôme 101 et une seconde face, opposée à la première face, est recouverte d'une seconde peau 303 pour former une paroi interne du radôme 101. Les première 302 et seconde 303 peaux sont en matériau diélectrique, par exemple en matériau composite. A titre illustratif, les première 302 et seconde 303 peaux sont en composite de verre, ou en composite de silice, ou en composite de carbure de silicium, ou en composite de quartz, ou en composite de basalte, ou en fibres d'aramide, ou en composite hybride.

La bande segmentée 200 est montée sur le panneau du radôme 101, de sorte à se trouver installée à l'intérieur du radôme 101. On parle ainsi de *bande segmentée interne.*

Un ou plusieurs plots métalliques 305 permettent l'attachement de la foudre et sa transmission à la bande segmentée 200 ou à une succession de bandes segmentées 200 à l'intérieur du radôme 101. Chaque plot métallique 305 est par exemple en cuivre, ou en acier inoxydable, ou en aluminium, ou en titane.

Un seul plot métallique 305 est représenté de manière illustrative sur la Fig. 3. Chaque plot métallique 305 sert d'élément d'attachement de la foudre. Chaque plot métallique 305 est installé dans un trou traversant le panneau du radôme 101, de sorte à pouvoir transmettre la foudre depuis l'extérieur du radôme 101 vers l'intérieur du radôme 101 où est située la bande segmentée 200 ou la succession de bandes segmentées 200. Chaque plot métallique 305 est installé de sorte à affleurer avec la paroi externe du radôme 101, c'est-à-dire qu'une base dudit plot métallique 305 est au même niveau que la surface de la paroi externe du radôme 101, qui est destinée à être soumise à un écoulement d'air (représenté par des flèches 300) lorsque l'aéronef 100 se déplace.

Dans un mode de réalisation particulier, chaque plot métallique 305 présente une forme tronconique, de sorte que la base la plus large de cette forme tronconique affleure avec la paroi externe du radôme 101. Dans ce cas, chaque plot métallique 305 est installé de sorte que la forme tronconique appuie contre un chanfrein réalisé sur la paroi externe du radôme 101. Le maintien en place dudit plot métallique 305 est alors réalisé à l'aide d'un écrou, complété éventuellement par une rondelle, et d'une tige filetée pratiquée sur un cylindre localisé dans le prolongement de la base la plus étroite de la forme tronconique dudit plot métallique 305.

D'autres formes et assemblages de plot métallique 305 sont possibles. Par exemple, chaque plot métallique 305 peut être installé au travers du panneau de radôme 101 et maintenu en position grâce à de la colle. Par exemple, chaque plot métallique 305 a une forme de cylindre.

Chaque plot métallique 305 est monté de telle sorte qu'une extrémité métallique dudit plot métallique 305 forme saillie sur la paroi interne du radôme 101, de sorte à pouvoir transmettre la foudre à la bande segmentée 200 ou à la succession de bandes segmentées 200. L'installation de la bande segmentée 200 ou de la succession de bandes segmentées 200 est réalisée de façon à avoir le dernier segment le plus proche possible de chaque plot métallique 305, typiquement d'une distance similaire à la distance existant entre les segments sur la bande segmentée 200. Préférentiellement, la distance séparant chaque plot métallique 305 du ou des segments adjacents est égale à la distance existant entre les segments.

Chaque plot métallique 305 est préférentiellement monobloc.

La bande segmentée 200 se trouvant alors à l'intérieur du radôme 101, ladite bande segmentée 200 n'est pas soumise aux aléas climatiques, tels que la pluie, le givre ou la poussière. Ladite bande segmentée 200 est ainsi préservée des salissures, de l'usure et de l'érosion. L'efficacité de ladite bande segmentée 200 est ainsi optimale et garantie. De plus, comme ladite bande segmentée 200 se trouve à l'intérieur du radôme 101, des opérations de peinture et/ou de ponçage du radôme 101 sont facilitées, en évitant d'avoir recours à des caches pour protéger ladite bande segmentée 200 pendant lesdites opérations de peinture et/ou de ponçage.

La bande segmentée 200 est préférentiellement collée sur la paroi interne du radôme 101. D'autres assemblages sont possibles pour placer la bande segmentée 200 sur la paroi interne du radôme 101, dès lors que, lorsque la foudre frappe ledit plot métallique 305 du côté de la paroi externe du radôme 101, la foudre est transmise aux segments (e.g. pastilles) de la bande segmentée 200 via ledit plot métallique 305. Par exemple, des dits plots métalliques 305 peuvent être utilisés comme moyens de fixation. Selon un exemple de réalisation, chacune des deux extrémités de la bande segmentée 200 comporte un évidement dans le matériau diélectrique permettant le passage d'un dit plot métallique 305. L'assemblage de la bande segmentée 200 est alors réalisé au moyen de l'écrou et de la tige filetée susmentionnée. La tige filetée est alors passée à l'intérieur de l'évidement correspondant de la bande segmentée 200 et l'écrou permet, par serrage, le maintien en place de la bande segmentée 200 du côté de la paroi interne du radôme 101.

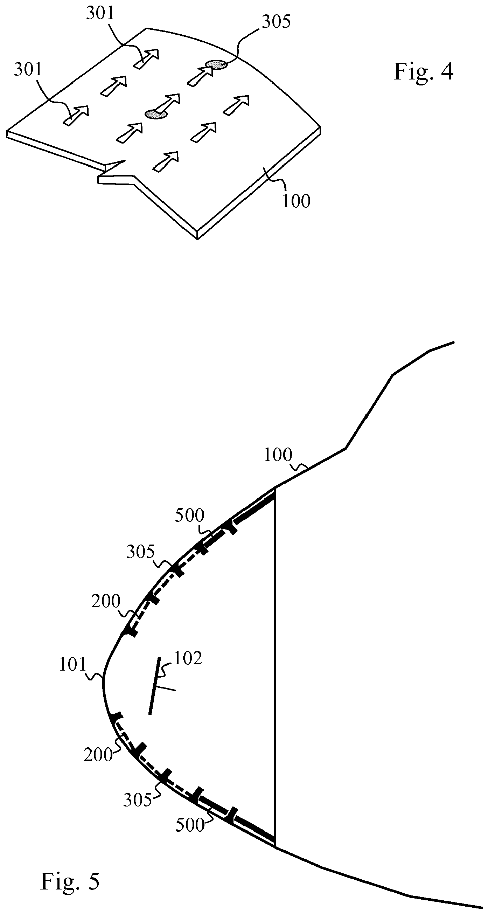

L'ensemble formé par le plot métallique 305 et la bande segmentée 200 permet ainsi une évacuation (représentée par une flèche 306) de la foudre par ionisation de l'air, comme si la bande segmentée 200 était placée sur la paroi extérieure du radôme 101. L'évacuation de la foudre s'opère jusqu'à la structure de l'aéronef 100, sur laquelle est monté le radôme 101. Pour ce faire, la bande segmentée 200 ou une succession de telles bandes segmentées 200 est connectée à la structure de l'aéronef 100, éventuellement via une bande métallique continue 500 ou une succession de telles bandes métalliques continues 500, tel que cela est décrit ci-après en relation avec la Fig. 5.

Le maintien de chaque plot métallique 305 avec le panneau du radôme 101 peut être renforcé grâce à de la résine 304 ou une entretoise isolante ou un insert isolant.

Grâce à l'affleurement de chaque plot métallique 305 avec la paroi externe du radôme 101, l'écoulement d'air (représenté par des flèches 300) s'effectue le long d'une paroi sensiblement lisse et reste donc substantiellement laminaire, comme représenté, en perspective, sur la **Fig. 4**. Ainsi, la traînée aérodynamique est réduite, comme la consommation de carburant de l'aéronef 100.

La **Fig. 5** illustre schématiquement, en vue en coupe simplifiée, un agencement de système de protection parafoudre combinant bandes segmentées internes et bandes métalliques continues internes, dans un mode de réalisation particulier de l'invention.

Un agencement avec une série de plots métalliques 305 assemblés sur le radôme 101 est réalisé de la façon décrite ci-dessus en relation avec la Fig. 3. Les plots métalliques 305 sont reliés, sur la paroi interne du radôme 101 par une bande segmentée 200 ou par une succession de bandes segmentées 200. Lorsqu'une succession de bandes segmentées 200 est mise en place, desdits plots métalliques 305 sont intercalés entre lesdites bandes segmentées 200.

La connexion de cette bande segmentée 200 ou de cette succession de bandes segmentées 200 au point de jonction (non représenté sur la Fig. 5) sur la structure de l'aéronef 100 est réalisé en plaçant le segment le plus proche dudit point de jonction à une distance similaire à la distance existant entre les segments de chaque bande segmentée 200. Préférentiellement, la distance séparant le point de jonction et ce segment le plus proche est égale à la distance existant entre les segments.

La connexion de cette bande segmentée 200 ou de cette succession de bandes segmentées 200 au point de jonction (non représenté sur la Fig. 5) sur la structure de l'aéronef 100 peut être réalisée grâce à une bande métallique continue 500 ou une succession de bandes métalliques continues 500, de sorte à assurer une mise à la masse. Un ou plusieurs plots métalliques 305 peuvent être utilisés pour assembler la bande métallique continue 500 ou la succession de bandes métalliques continues 500 sur la paroi interne du radôme 101. Un exemple d'assemblage entre bandes métalliques continues 500 et plots métalliques 305 est divulgué dans le document de brevet FR 2999535 B1. Plus particulièrement, des plots de fixation (tels que les plots métalliques 305) sont insérés dans des trous traversants réalisés dans le panneau du radôme 101, et sont en contact électrique avec les bandes métalliques continues 500, de sorte que les bandes métalliques continues 500 sont montées de façon désaxée par rapport aux axes centraux des plots de fixation (*i.e*. axes confondus avec les axes de perçage des trous dans le panneau du radôme 101). Par «montées de façon désaxée par rapport aux axes centraux des plots de fixation », il faut notamment comprendre que l'axe longitudinal de chaque bande métallique continue 500 n'est pas inscrit dans le plan défini par les axes centraux d'au moins deux plots de fixation. En particulier, l'axe longitudinal de chaque bande métallique continue 500 et les axes centraux des plots de fixation ne se coupent pas. Des éléments intermédiaires pour le montage des bandes métalliques continues 500 peuvent être utilisés. Chaque élément intermédiaire peut comporter une partie formant corps pour sa fixation à un plot de fixation et, en saillie latéralement à partir de la partie formant corps, une partie formant pince pour la fixation d'une bande métallique continue 500. Chaque élément intermédiaire peut comporter deux parties intermédiaires (ou brides intermédiaires), superposées l'une par rapport à l'autre. Chaque partie intermédiaire peut comporter une première branche pourvue d'un orifice de passage, notamment sensiblement circulaire, pour un plot de fixation, les deux premières branches définissant ainsi la partie formant corps de l'élément intermédiaire. Chaque partie intermédiaire peut aussi comporter une seconde branche comportant un renfoncement, notamment sensiblement semi-cylindrique, les deux secondes branches définissant la partie formant pince de l'élément intermédiaire. Les deux renfoncements définissent ainsi un passage traversant, notamment cylindrique, pour prendre ladite bande métallique continue 500 en « sandwich » entre les deux renfoncements.

Cet agencement est particulièrement avantageux pour assurer que la distance dans l'air entre le système antennaire 102 et le plot métallique 305 le plus proche dudit système antennaire 102 est supérieure à la distance d'air cumulé entre les segments (*e.g*. pastilles) de la bande segmentée 200 ou de la succession de bandes segmentées 200, ce qui évite une formation d'arc électrique entre ledit plot métallique 305 et le système antennaire 102.

Comme illustré sur la Fig. 5, l'agencement décrit ci-dessus peut être répliqué plusieurs fois sur le radôme 101, de manière substantiellement équirépartie autour de l'axe central du radôme 101, de sorte que les bandes segmentées 200 prolongent les bandes métalliques continues 500 en direction dudit axe central, sur lequel est substantiellement localisé le système antennaire 102.

Grâce à cet agencement à base de bandes segmentées 200, le diagramme de rayonnement du système antennaire 102 n'est pas perturbé par le système de protection parafoudre, qui lui-même est protégé des intempéries par le radôme 101 au même titre que le système antennaire 102, et la transparence du radôme 101 aux ondes radioélectriques n'est pas obérée.

## Revendications

1. Aéronef (100) comportant au moins un système antennaire (102) et au moins un radôme (101), chaque radôme (101) protégeant au moins un dit système antennaire (102), chaque radôme (101) comportant une paroi externe (302) destinée à être soumise à un écoulement d'air (300) lorsque l'aéronef (100) se déplace et une paroi interne (303) opposée à ladite paroi externe (302), au moins un radôme comportant un système de protection parafoudre comportant une bande segmentée (200) qui est destinée à transmettre la foudre, par ionisation de l'air entre des segments régulièrement espacés sur ladite bande segmentée, à destination d'un point de jonction avec la structure de l'aéronef (100), **caractérisé en ce que** :
- la bande segmentée (200) est installée du côté de la paroi interne (303) dudit radôme (101) ;
- le système de protection parafoudre comporte en outre au moins un plot métallique (305) installé dans un trou traversant dudit radôme (101) de sorte à affleurer avec la paroi externe (302) du radôme,
**en ce que** l'agencement de la bande segmentée (200) et du ou des plots métalliques (305) est tel que, lorsque la foudre frappe un dit plot métallique (305) du côté de la paroi externe (302) dudit radôme (101), la foudre est transmise à ladite bande segmentée (200) du côté de la paroi interne (303) dudit radôme (101),
et **en ce que** le système antennaire (102) protégé par ledit radôme (101) est placé à une distance dans l'air avec le plot métallique le plus proche supérieure à la distance d'air cumulé entre les segments (204) de la bande segmentée (200).

2. Aéronef (100) selon la revendication 1, dans lequel la bande segmentée est destinée à être collée sur la paroi interne (303) dudit radôme (101).

3. Aéronef (100) selon la revendication 1 ou 2, dans lequel chaque plot métallique (305) présente une forme tronconique et est destiné à être installé de sorte que la base la plus large de cette forme tronconique affleure avec la paroi externe (302) dudit radôme (101).

4. Aéronef (100) selon l'une quelconque des revendications 1 à 3, comportant en outre une bande métallique continue (500) ou une succession de bandes métalliques continues (500) placée du côté de la paroi interne (303) dudit radôme (101) et connectant la bande segmentée (200) audit point de jonction.

5. Aéronef (100) selon la revendication 4, dans lequel la bande métallique continue (500) ou la succession de bandes métalliques continues (500) est maintenue du côté de la paroi interne (303) dudit radôme (101) grâce à au moins un dit plot métallique (305).

6. Aéronef (100) selon l'une quelconque des revendications 1 à 5, dans lequel ladite bande segmentée (200) fait partie d'une succession de bandes segmentées entre lesquelles sont intercalés desdits plots métalliques (305).
